# EUROPEAN PATENT SPECIFICATION

(11) **EP 3 478 087 B1**
(45) Date of publication and mention of the grant of the patent: **30.03.2022**
(21) Application number: 17736862.8
(22) Date of filing: 27.06.2017
(51) Int. Cl.: A23L 7/109, A21D 2/18, A21D 2/36, A21D 13/60

(54) **FRIED DOUGH PRODUCTS**
FRITTIERTE TEIGPRODUKTE
PRODUITS À BASE DE PÂTE FRITE

(30) Priority: 30.06.2016 CN 201610494096; 06.09.2016 US 201662383843 P
(43) Date of publication of application: 08.05.2019
(73) Proprietor: Cargill, Incorporated, Wayzata, MN 55391 (US)
(72) Inventor: ADHIKARI, Prakash, Beijing Hebei 102206 (CN)
(74) Representative: Morariu Radu, Mihai Dorin
(86) International application number: PCT/US2017/039487
(87) International publication number: WO 2018/005480

(56) References cited:
- EP-A1- 0 431 650
- JP-A- 2002 125 579
- JP-A- 2005 058 082
- KIM YONGWOOK ET AL: "Utilization of preharvest-dropped apple powder as an oil barrier for instant fried noodles", LWT- FOOD SCIENCE AND TECHNOLOGY, ACADEMIC PRESS, UNITED KINGDOM, vol. 53, no. 1, 6 March 2013 (2013-03-06), pages 88-93, XP028582036, ISSN: 0023-6438, DOI: 10.1016/J.LWT.2013.02.022
- BAJAJ ET AL: "Gellan gum for reducing oil uptake in sev, a legume based product during deep-fat frying", FOOD CHEMISTRY, ELSEVIER LTD, NL, vol. 104, no. 4, 1 January 2007 (2007-01-01), pages 1472-1477, XP022095472, ISSN: 0308-8146, DOI: 10.1016/J.FOODCHEM.2007.02.011
- B.S. GOWRI ET AL: "Effect of additives on fat uptake and sensory quality of deep fried foods", NUTRITION AND FOOD SCIENCE, vol. 38, no. 3, 23 May 2008 (2008-05-23), pages 222-228, XP055400656, GB ISSN: 0034-6659, DOI: 10.1108/00346650810871902

## Description

### FIELD OF THE INVENTION

The present invention relates to a dough composition suitable for frying, a method for making and frying said dough composition and various fried dough products.

### BACKGROUND OF THE INVENTION

Fried foods, referred as to foods produced by frying, are widely favored as foods supporting the modern people's diet. Fried foods are widely sold at, for example, fast food shop, confectionery, bakery, cake shop, lunch shop, convenience store and supermarket, with a large variety such as fried potatoes, fried chicken, tempura (Japanese deep-fat fried food) or KARAAGE (a Japanese deep-fried food such as deep-fried chicken or fish), piroshky, croquette, as well as a food which is produced by kneading dough ingredients (dough composition) such as wheat flour, shaping the dough composition, and frying the shaped dough composition. Examples of the latter food include a doughnut, fried bread (containing one or more filling ingredients such as curry or sausage), a fried noodle which is obtained by frying a noodle shaped dough composition, and the like.

Lately, it became very important for fried foods to control their oil contents in a proper range. For example, the structure of the fried dough composition is converted into a sponge-like structure during frying because of the expansion of the dough. As a result, the fried dough composition absorbs a large amount of frying oil. Recently, it was revealed that the ingestion of too much oil may lead to obesity, accumulation of fats, blood diseases and the like, and harmful effects of such ingestion of too much oil have been emphasized. Under such circumstances, there has been a growing trend to reduce ingestion of fats and fatty oils in daily dietary habits. Moreover, there may be instances where too much intake of oil may seriously ruin the texture of the fried food product.

In this connection, there have been attempts to make fried dough compositions such as doughnuts and fried noodles whose oil contents are reduced as much as possible. Under these circumstances, several methods are proposed for reducing oil absorption of a fried dough composition.

For example, Japanese Patent Application Publication No. 2001-333691 proposes a method of reducing the oil absorption by use of a baking powder. Meanwhile, Japanese Patent Application Publication No. 2000-236821 proposes an oil absorption inhibitor containing alginic texture retention and oil absorption reduction ability, and are unsatisfactory from a practical viewpoint.

Japanese Patent Application Publication No. 11-56217 discloses a method in which a polysaccharide thickener is used for a wheat flour product such as a doughnut. However, the object of the method is to provide a product with a soft texture. Accordingly, this document suggests nothing about oil absorption reduction, and makes no reference to methyl cellulose or hydroxypropyl methyl cellulose.

Japanese Patent Application Publication No. 2005-218409 discloses a method of producing a dough composition using methyl cellulose or hydroxypropyl methyl cellulose. In this method, cereal crop powder and methyl cellulose or hydroxypropyl methyl cellulose are mixed with each other in a powdery state, and then water is added thereto. JP 2005 058082, JP 2002 125579, EP0431650, Kim Yongwook et al. LWT Food Sci. and Tech, v.53 (1), pg.88-93 and Bajaj et al. Food Chem. 104(4), pg. 1472-1477 relate to the use of fibers to reduce fat absorbtion in fried products.

Similarly, Journal of Food Science 58(1), pp. 204 to 205 and 222 discloses an oil absorption suppression effect achieved by adding hydroxypropyl methyl cellulose to dough for a doughnut. In this production method, cereal crop powder and hydroxypropyl methyl cellulose are mixed with each other in a powdery state, and then water is added thereto, as similar to the above-described method.

LWT - Food Science and Technology 53 (2013) 88-93, investigated the effects of preharvest-dropped apple powder (PDAP) on the functional properties of instant fried noodles in terms of rheological, textural, and oil-resisting properties. It was observed that when wheat flour was replaced with PDAP at 10, 20, and 30% by weight, the oil absorption index of wheat flour was reduced by 6 ~ 9%.

In Food Hydrocolloids 22 (2008), pp. 1062 to 1067, a method is examined in which oil absorption is suppressed by adding methyl cellulose to batter for a food product.

All of the above proposed methods achieve a certain reduction of oil absorption of a fried dough product. However it was observed that while reducing the oil absorption, other properties of the fried dough product may be negatively affected, e.g. the texture, mouthfeel and visual aspect, e.g. colour. It may thus be an object of the present invention to provide a fried dough composition which not only has a reduced oil absorption but also provides the fried food with an acceptable visual appearance, texture and/or mouthfeel. invention may be to provide fried dough products with lowered oil contents and optimum properties, e.g. visual appearance, mouthfeel and/or texture.

### SUMMARY OF THE INVENTION

The present inventors have found that when a dough composition comprising fruit-juice powder is fried, the fried dough composition shows a reduced oil absorption ability while also presenting excellent properties such as visual appearance, texture and/or mouthfeel.

The invention therefore provides a dough composition for frying comprising fruit-juice powder. The invention further provides a fried dough composition comprising fruit-juice powder.

In a further aspect, the present invention provides a method for producing and frying the dough composition of the invention, said method comprising the steps of:
a) providing an aqueous composition comprising water and a fruit-juice powder;
b) providing a second composition comprising flour;
c) mixing the aqueous composition with the second composition to obtain a dough composition; and
d) shaping and frying the dough composition to obtain a fried dough composition.

The present inventors observed that the frying process can be optimized in the method of the present invention, in that larger quantities of dough can be fried in oil without changing the oil.

### BRIEF DESCRIPTION OF THE FIGURES

Figure 1 contains a comparison between commercially available noodles, noodles known from literature and noodles made in accordance with the invention.
Figure 2 shows various disadvantages of dough manufactured from ingredients known to reduce the oil uptake.

### DETAILED DESCRIPTION OF THE INVENTION

The present invention provides a dough composition suitable for frying comprising fruit-juice powder (hereinafter *"FJP").* The dough composition of the invention when fried (hereinafter referred to the *"inventive fried dough composition"),* may have reduce oil absorption while also showing optimum properties, in particular an optimum visual appearance, e.g. colour. The inventive fried dough composition may also show an appealable mouthfeel and/or texture to the consumers.

Within the context of the present invention, by FJP is herein understood a powder obtained by dehydrating fruit juices using common techniques in the art, e.g. spray drying or freeze drying. FJP are commercially available and can be purchased from various companies. Preferably, the FJP has a moisture content of at most 5 wt% relative to the weight of the powder, more preferably at most 2 wt%, most preferably at most 1 wt%.

Preferably, the FJP is produced from fruits which are members of Rosaceae family, preferably from Pomoideae sub-family. Preferably, the FJP is produced from a fruit chosen from the group consisting of apples, pears, quinces, apricots, plums, cherries, peaches, raspberries, loquats, nashi, and strawberries. Even more preferably, the FJP is produced from apples or pears. Most preferably, the FJP is produced from apples, hereinafter referred to as apple-juice powder (AJP). The AJP used in the present invention may be originated from any apple variety or apple cultivar (see Elzebroek, A.T.G.; Wind, K. (2008). Guide to Cultivated Plants. Wallingford: CAB International. p. 27. ISBN 1-84593-356-7).

The fruit juice is the extracted juice from fruits and may or may not have been concentrated. Before being dehydrated into the FJP, additional ingredients may be added to the fruit juice such as for example sugar, honey, flavours, colorants, polysaccharides, preservatives such as nitrogen containing substances and the like. Preferably, the fruit juice is used as extracted, i.e. without further ingredients being added thereto, to obtain the FJP.

The FJP, and in particular the AJP, is markedly different than any other fruit powder, in particular apple powder such as those produced from pomace, i.e. the waste obtained after producing the apple juice, or even from entire apple fruits. The difference between FJP and powders made by crushing fruits is that the FJP is enriched in soluble dietary fibers. For instance, the FJP contains soluble dietary fibers (SDF) and insoluble dietary fibers (IDF) in a ratio SDF/IDF of at least 1.

Preferably, the FJP is AJP, which contains dietary fibers, said dietary fibers consisting of SDF and IDF, wherein said SDF are in an amount of at least 50 wt%, more preferably at least 70 wt%, even more preferably at least 90 wt%, most preferably at least 95 wt% relative to the total amount of dietary fibers. The remaining, i.e. up to 100 wt% dietary fibers, are IDF. The content of such fibers can be determined in accordance with the methodology specified in LWT - Food Science and Technology 53 (2013), 88-93.

Preferably, the FJP is AJP containing SDF in an amount of at least 50 wt% % relative to the total amount of dietary fibers and further containing pectin in an amount of at least 10 wt% relative to the weight of the AJP. Preferably, the amount of SDF is at least 70 wt%, even more preferably at least 90 wt%, most preferably at least 95 wt% relative to the total amount of dietary fibers. Preferably, the amount of pectin is at least 20 wt%, more preferably at least 30 wt%. Preferably, the amount of pectin contained by the APJ is at most 90%, more preferably at most 70 wt%, most preferably at most 50wt%. Preferably, said amount of pectin is between 10 and 90 wt%, more preferably between 20 and 70 wt%, most preferably between 30 and 50 wt%.

In another embodiment, the FJP is a Pear Juice Powder (PJP). Preferably, the PJP contains dietary fibers, said dietary fibers consisting of SDF and IDF, wherein said SDF are in an amount of at least 50 wt%, more preferably at least 70 wt%, even more preferably at least 90 wt%, most preferably at least 95 wt% relative to the total amount of dietary fibers. The remaining, i.e. up to 100 wt% dietary fibers, are IDF.

Preferably, the FJP is used in the inventive dough composition in an amount of at least 0.01 wt% relative to the total mass of said dough composition, more preferably at least 0.05 wt%, even more preferably at least 0.10 wt%, even more preferably at least 0.20 wt%, most preferably at least 0.30 wt%. Preferably said amount is at most 5.00 wt%, more preferably at most 3.00 wt%, most preferably at most 1.00 wt%.

Preferably, the FJP is AJP and is used in an amount of at least 0.01 wt% relative to the total mass of said dough composition, more preferably at least 0.05 wt%, even more preferably at least 0.10 wt%, even more preferably at least 0.20 wt%, most preferably at least 0.30 wt%. Preferably said amount is at most 5.00 wt%, more preferably at most 3.00 wt%, most preferably at most 1.00 wt%.

In one embodiment, the FJP is PJP and is used in an amount of at least 0.01 wt% relative to the total mass of said dough composition, more preferably at least 0.05 wt%, even more preferably at least 0.10 wt%, even more preferably at least 0.20 wt%, most preferably at least 0.30 wt%. Preferably said amount is at most 5.00 wt%, more preferably at most 3.00 wt%, most preferably at most 1.00 wt%.

The dough composition of the invention may further comprise additional ingredients such as for example food grade salts such as common salts or organic acid salts, polysaccharides such as hydrocolloids and starch, lecithin, emulsifiers, proteins, sugar, oil, fat, baking powder, flavorings, dairy products and/or combinations thereof.

Non-limiting examples of organic acid salts that can be suitably used in the present invention include sodium citrate, potassium citrate, calcium citrate, sodium acetate, sodium ascorbate, sodium lactate, calcium lactate, sodium sulfate, potassium sulfate, calcium sulfate, potassium carbonate, sodium carbonate, calcium carbonate and calcium glycerophosphate.

Preferably, the salt when used is present in an amount (relative to the total weight of the dough) of between 0.5 wt% and 5.0 wt%.

Non-limiting examples of proteins that can be suitably used in the present invention include egg albumen, wheat gluten, soybean protein, oat protein, barley protein and the like.

Non-limiting examples of oils include oils having an animal or a vegetal origin. Examples of oils include those extracted from palm, rice bran, corn, sunflower, safflower, olives, canola, walnut, flaxseed, grapeseed, or any combination thereof.

Non-limiting examples of polysaccharides that can be suitably used in the present invention include alginic acid, sodium alginate, pectin, carboxymethyl cellulose, carrageenan, guar gum, curdlan, starch, gum arabic, cassia gum, xanthan gum, chitosan, psyllium seed gum, gellan gum, tamarind seed gum, dextran, furcellaran, pullulan and hyaluronic acid. Most preferred polysaccharides are carrageenan, gellan gum, starch and combinations thereof.

The starch that may be used in the inventive dough composition may be any starch suitable for food products, e.g. native or modified starches and combinations thereof. Preferably, the starch is used in an amount of at least 3 wt% relative to the total dough weight, more preferably at least 6 wt%, most preferably at least 9 wt%. Preferably, the starch is used in an amount of at most 20 wt% relative to the total dough weight, more preferably at most 17 wt%, most preferably at most 15 wt%.

A native starch as used herein, is one as it is found in nature. Also suitable are starches derived from a plant obtained by any known breeding techniques. Typical sources for the starches are cereals, tubers and roots, legumes and fruits. The native source can be any variety, including without limitation, corn, potato, sweet potato, barley, wheat, rice, sago, amaranth, tapioca (cassava), arrowroot, canna, pea, banana, oat, rye, triticale, and sorghum, as well as low amylose (waxy) and high amylose varieties thereof. Low amylose or waxy varieties is intended to mean a starch containing at most 10% amylose by weight, preferably at most 5%, more preferably at most 2% and most preferably at most 1% amylose by weight of the starch. High amylose varieties is intended to mean a starch which contains at least 30% amylase, preferably at least 50% amylose, more preferably at least 70% amylose, even more preferably at least 80% amylose, and most preferably at least 90% amylose, all by weight of the starch. The starch may be physically treated by any method known in the art to mechanically alter the starch, such as by shearing or by changing the granular or crystalline nature of the starch, and as used herein is intended to include conversion and pregelatinization. Methods of physical treatment known in the art include ball-milling, homogenization, high shear blending, high shear cooking such as jet cooking or in a homogenizer, drum drying, spray-drying, spray cooking, chilsonation, roll-milling and extrusion, and thermal treatments of low (e.g. at most 2 wt%) and high (above 2 wt%) moisture containing starch. The starch may be also chemically modified by treatment with any reagent or combination of reagents known in the art. Chemical modifications are intended to include crosslinking, acetylation, organic esterification, organic etherification, hydroxyalkylation (including hydroxypropylation and hydroxyethylation), phosphorylation, inorganic esterification, ionic (cationic, anionic, nonionic, and zwitterionic) modification, succination and substituted succination of polysaccharides. Also included are oxidation and bleaching. Such modifications are known in the art, for example in Modified starches: Properties and Uses. Ed. Wurzburg, CRC Press, Inc., Florida (1986). Preferably, a blend of starches containing native and modified starches is used, the starch being preferably a tapioca starch. When such blends are used, preferably, the ratio of native starch : modified starch is between 1:0.1 and 0.1:1, more preferably between 1:0.5 and 0.5:1, most preferably between 1:0.8 and 0.8:1.

Preferably, the starch used in the inventive dough composition is a waxy starch, preferably a tapioca waxy starch, a wheat waxy starch or a maize waxy starch.

Preferably, the emulsifier is chosen from a group consisting of mono and diglycerides; distilled monoglycerides; mono- and diglycerides of saturated or unsaturated fatty esters; diacetyl tartaric acid esters of mono- and diglycerides (DATEM); modified lecithin; polysorbate 20, 40, 60 or 80; sodium stearyl lactylate; propylene glycol monostearate; succinylated mono- and diglycerides; acetylated mono- and diglycerides; propylene glycol mono- and diesters of fatty acids; polyglycerol esters of fatty acids; lactylic esters of fatty acids; glyceryl monosterate; propylene glycol monopalmitate; glycerol lactopalmitate and glycerol lactostearate; and mixtures thereof. The emulsifiers may be used independently, or two or more kinds may be used in combination.

Preferably, the inventive dough composition contains FJP and a hydrocolloid chosen from the group consisting of xanthan gum, carrageenan, locust bean gum, alginate, gellan gum and microfibrillated cellulose. Preferably, the ratio hydrocolloid : FJP is between 1:1 and 15:1, more preferably between 2:1 and 10:1, most preferably between 3:1 and 5:1. Preferably, the hydrocolloid is gellan gum or carrageenan, most preferably gellan gum. When gellan gum is used, the ratio gellan gum : FJP is preferably between 1:1 and 15:1, more preferably between 2:1 and 10:1, most preferably between 3:1 and 5:1.

Preferably, the inventive dough composition contains AJP and a hydrocolloid chosen from the group consisting of xanthan gum, carrageenan, locust bean gum, alginate, gellan gum and microfibrillated cellulose. Preferably, the ratio hydrocolloid : AJP is between 1:1 and 15:1, more preferably between 2:1 and 10:1, most preferably between 3:1 and 5:1. Preferably, the hydrocolloid is gellan gum or carrageenan, most preferably gellan gum. When gellan gum is used, the ratio gellan gum : AJP is preferably between 1:1 and 15:1, more preferably between 2:1 and 10:1, most preferably between 3:1 and 5:1.

Preferably, the inventive dough composition contains AJP, starch and a hydrocolloid chosen from the group consisting of xanthan gum, carrageenan, locust bean gum, alginate, gellan gum and microfibrillated cellulose. Preferably, the ratio hydrocolloid : AJP is between 1:1 and 15:1, more preferably between 2:1 and 10:1, most preferably between 3:1 and 5:1. Preferably, the starch is used in an amount of at least 3 wt% relative to the total dough weight, more preferably at least 6 wt%, most preferably at least 9 wt%. Preferably, the starch is used in an amount of at most 20 wt% relative to the total dough weight, more preferably at most 17 wt%, most preferably at most 15 wt%. Preferably, the hydrocolloid is gellan gum or carrageenan, most preferably gellan gum. When gellan gum is used, the ratio gellan gum : AJP is preferably between 1:1 and 15:1, more preferably between 2:1 and 10:1, most preferably between 3:1 and 5:1.

These additional ingredients may be added independently or in combination of a plurality of them. The additional ingredients can properly be selected depending on the object matter to which the components are to be applied.

The inventive dough composition further comprises flour and water. The flour may originate from any cereal crop such as rice, farina, sorghum, potato, tapioca, buckwheat, rye, soybean, pigeon pea, yam, barley, wheat, oat, foxtail millet, Japanese barnyard millet, proso millet, maize and beans. Preferably, the flour is used in an amount of at least 65 wt% relative to the total dough weight, more preferably at least 75 wt%, most preferably at least 85 wt%.

The amounts of the flour and of the additional ingredients may not be particularly limited as long as the object of the present invention is not impaired.

The invention further relates to a fried dough obtainable by frying the inventive dough composition.

The FJP may be formulated into an oil absorption retarder composition which can be utilized during the dough manufacturing process. The present invention therefore relates also to an oil absorption retarder composition comprising FJP, said FJP being preferably AJP and optionally any one of the additional ingredients mentioned hereinabove, e.g. organic acid salts, polysaccharides, emulsifiers, proteins and/or combinations thereof.

The present invention further relates to a method for producing and frying the dough composition of the invention, said method comprising the steps of:
a) providing an aqueous composition comprising water and FJP, said FJP being preferably AJP or PJP, most preferably AJP;
b) providing a second composition comprising flour;
c) mixing the aqueous composition with the second composition to obtain a dough composition; and
d) shaping and frying the dough composition to obtain a fried dough composition.

The amount of FJP in the aqueous composition should be adjusted to yield the desired amount of FJP in the inventive dough composition. Preferably, the aqueous composition at step a) comprises the FJP in an amount (relative to the total amount of said aqueous composition) of at least 0.3 wt%, more preferably at least 0.7 wt%, most preferably at least 1.0 wt%. Preferably said amount is at most 5.0 wt%, more preferably at most 3.5 wt%, most preferably at most 2.0 wt%. Preferably, said FJP is AJP or PJP, most preferably AJP.

Said aqueous composition preferably further comprises a food grade salt, e.g. NaCl. Said aqueous composition preferably further comprises a food grade alkali, non-limiting examples thereof including potassium carbonate, sodium carbonate, tetrasodium pyrophosphate, sodium polyphosphate, sodium phosphate dibasic and combinations thereof. Preferably, said alkali is used in an amount chosen to yield an amount of at least 0.05 wt% relative to the total dough weight, more preferably at least 0.10 wt%, most preferably at least 0.20 wt%. Preferably said amount of alkali relative to the total dough weight is at most 3 wt%, more preferably at most 1 wt% most preferably at most 0.50 wt%. Preferably, the pH of said aqueous composition is at least 7.5, more preferably at least 8.5, most preferably at least 9.0. Preferably, said pH is at most 12.0, more preferably at most 11.0, most preferably at most 10.5.

The second composition comprises flour and optionally additional ingredients and/or additional components as disclosed hereinbefore and which will not be repeated herein. Preferably, said second composition comprises a starch. Preferably, the starch is used in an amount of at least 5 wt% relative to the total flour amount, more preferably at least 10 wt%, most preferably at least 15 wt%. Preferably, said amount is at most 50 wt%, more preferably at most 35 wt%, most preferably at most 25 wt%. Preferably, the starch is a waxy starch, preferably a tapioca waxy starch, a wheat waxy starch or a maize waxy starch.

Preferably, the moisture content of the second composition is at most 20 wt%, more preferably at most 18 wt%, most preferably at most 15 wt%. The moisture content can be determined by weighing a sample placed in a pre-dried vessel and subsequently heating the vessel containing the sample overnight in an oven at 105°C.

The moisture content (in wt%) can be calculated as (A₁-A₂)/A₁×100 where A₁ is the weight of the sample before drying in the oven and A₂ is the weight of the resulted dried sample.

Although not necessary, said second composition may also comprise an emulsifier, non-limited examples being given hereinabove. Preferably, the emulsifier is present in the second composition in an amount of at most 0.5% (relative to the total amount of said second composition), more preferably at most 0.3 wt%, most preferably at most 0.1 wt%.

According to the method of the invention, the aqueous composition is mixed with the second composition to obtain the inventive dough composition. Any known mixing device can be utilized. Preferably, said compositions are mixed for a sufficient period of time necessary to produce a homogenous dough composition. A suitable periods of time is at least 5 minutes, more preferably at least 10 minutes, most preferably at least 15 minutes. Preferably, said composition are mixed in at least two mixing steps, one mixing step utilizing a high mixing speed and the other a low mixing speed. By high mixing speed is herein understood a mixing speed of at least 30 Hz, more preferably at least 35 Hz, most preferably at least 40 Hz. By low mixing speed is herein understood a mixing speed of at most 25 Hz, more preferably between 10 and 25 Hz.

Once produced, the inventive dough composition can be shaped and fried. For example, the inventive dough composition may be shaped as a doughnut, bread or as noodles by e.g. sheeting and cutting or extruding it. Examples of methods for making noodles are disclosed in WO 2006/066609, US 5,332,592 and US 2015/0086689 included herein in their entirety by reference.

The invention further relates to a fried dough product, said product comprising FJP. Preferably, the FJP is AJP. Non-limiting examples of fried dough products originating from various regions of the world include akara, achappam, bamiyeh, Bánh chuối, Bánh gối, Bánh rán, bánh cam, Bánh rế, Bánh tôm (bánh tôm Hố Tây), Bannock, BeaverTails, Beignet, Berliner or Krapfen, Bhatoora, Binangkal, Bolinho de chuva, Bomboloni, Boortsog, Bugnes, Buñuelo, Çäkçäk, Chakli (Murukku), Chiacchiere, Cenci, Chiburekki, Chruściki, Churro, Ciambelle, Coxinha, Crostoli, Curry bread, Dutchie, Elephant ears, Falafel, Fartura, Festival, Fraser, Fried bread, Fried Coke, Fritter, Fritule, Frybread, Funnel cake, Gogosi, Haliva, Hirschhörner, Hushpuppies, Jalebi, Jersey wonders, Jin deui, Kachori, Karinto, Khuushuur, Khvorost, Kleina, Klejne, Krafne, Kroštule, Kurkure, Lánagos, Laufabrauð, Lokma, Loukoumades, Lörtsy, Luchi, Ma Hua, Malasada, Mandazi, Meat doughnut, Mekitzi, Mutzenmandeln, Namak pare, Nonnevotte, Oliebollen / Smoutebollen, Paczki, Pakora, Pampushky, Papadum (Papar), Paraoa Parai, Paratha, Pastel, Peremech, Pestiños, Picarones, Pirozhki, pyrizhki, or belyashi, Ponchiki, Porras, Puff Puff, Puftaloon, Puri, Papri, Rissole, Rosette, Rosquillas, Samosa, Sata andagi, Schneeballen, Shakoy, Shuangbaotai, Sopaipilla, Struffoli, Tenkasu, Tulumba, Urrädla, Uštipci, Vada, Verhuny, Youtiao, Zeppole and the like.

The present invention further relates to a fried noodle or a fried doughnut comprising FJP, preferably AJP or PJP, most preferably AJP. Noodle is one of the most important staple foods in many countries, in particular the Asian countries and they are prepared by passing the dough through shaped extrusion orifices or by slicing a dough sheet into ribbons of noodles. The ribbons are then steamed for a short period of time, cut to specified lengths and fried in, for example, palm oil or a combination of oils heated to typically between 100°C and 200°C, preferably between 110°C and 190°C, most preferably between 125°C to 180°C for usually less than two minutes, preferably less than one minute. Frying imparts a desirable appearance and taste to the resulting noodle product.

The noodles absorb a small amount of the oil which browns and gives the noodles a desirable fried flavor. Fried noodles have a low moisture content which does not need to be reduced for extended storage. Noodle moisture content is about 1% to 5% which allows for long term storage without the need for refrigeration. However, over time, oils within the noodles tend to oxidize. This oxidation produces a rancid odor and taste which, although not necessarily harmful, imparts a distinctive flavor to the product and limits its shelf life. It was observed however that the noodles of the invention show have a reduced oil content and hence they may be less susceptible to a change in colour, taste and other properties over time.

The noodle of the present invention can be any noodle known in the art. Such noodles can have a variety of sizes and shapes, non-limiting examples thereof including Chinese raw noodles, Sashima, Japanese udon noodles, Chinese wet noodles, Malaysian hokkien noodles, Chuka-men noodles, instant fried noodles and Thai bamee noodles. Instant fried noodles are preferred.

Hereinafter, the present invention will be described with reference to the following Examples and Comparative Experiments, without however being limited thereto.

### EXAMPLES 1-3 AND COMPARATIVE EXPERIMENT 1 - DOUGH PREPARATION WITH AJP

A first aqueous solution was made by mixing various amounts of commercially available AJP having more than 95 wt% SDF, with a salt, a commercially available alkali (a blend of potassium carbonate, sodium carbonate, tetrasodium pyrophosphate, sodium polyphosphate and sodium phosphate dibasic) and water in the quantities mentioned in Table 1. The pH of said aqueous solution was 10.5. The mixing of said aqueous solution was carried out with a stirring device at 800 rpm

A second composition was made by blending a wheat flour with a commercially available 50/50 blend of native and modified (C^{∗}Cream Ax 75342 from Cargill, Inc) tapioca starches in the quantities mentioned in Table 1. Said composition had a moisture content of about 13 wt%. The blending of the second composition was carried out by hand or a commercially available blender

A dough was made by mixing the first aqueous solution and the second composition with a commercially available dough mixer. The mixing was carried out in three steps, a first mixing step of 120 seconds at 20 Hz mixing speed, a second mixing step of 480 seconds at 40 Hz mixing speed and a third mixing step of 420 seconds at 25 Hz mixing speed.

**Table 1**

| **Ingredients** | | **C. EXP. 1** | **EX. 1** | **EX. 2** | **EX. 3** |
|---|---|---|---|---|---|
| | | [%] | [%] | [%] | [%] |
| **First Aqueous Solution** | AJP | 0 | 0.2 | 0.5 | 1.0 |
| | NaCl | 1.0 | 1.0 | | |
| | alkali | 0.3 | 0.2 | | |
| | water | 27.7 | 27.8 | 27.5 | 27.0 |
| **Second Composition** | Flour | 56.8 | 56.6 | | |
| | Starch | 14.2 | 14.2 | | |

### The above amounts are calculated relative to the total dough composition.

### EXAMPLE 4 - NOODLE PREPARATION

The dough prepared in Examples 1-4 was rolled 6 times using a noodle roller to produce a dough sheet of about 1 mm thickness. The sheet was then cut with a #20 cutter and waved to produce raw noodles having about 1 mm in diameter. The raw noodles were steamed for 2 minutes at about 100 °C and 0.06 MPa after which they were weighted into portions.

The steamed raw noodles portions were fried in palm oil at 145 °C for 90 seconds, while stirring with about 760 rpm to homogenize the oil temperature in the fryer. The fried noodles were shaken 20 times to remove the excess oil, and subsequently cooled and packe

To test reproducibility, 6 samples were made and tested for each recipe. The results are presented in Table 2 below.

**Table 2**

| **Fried noodle made out of composition of** | **Oil content** | **Oil reduction** [%] | **Oil reduction** [g] |
|---|---|---|---|
| **C. EXP. 1** | 19.44 | - | - |
| **EX.1** | 17.5 | 10.8 | 1.94 |
| **EX.2** | 16.0 | 17.7 | 3.44 |
| **EX.3** | 17.9 | 7.9 | 1.54 |

The noodles made from the dough containing the AJP had the same color, mouthfeel and texture as the noodles of the control.

### EXAMPLE 5 AND COMPARATIVE EXPERIMENT 2 - DOUGH PREPARATION WITH AJP AND GELLAN GUM

A dough was manufactured as in Examples 1-3, with the difference that 1.5 g of Gellan Gum were blended with 1.0 g of AJP and the obtained blend was added to the first aqueous solution.

In Comparative Experiment 2, 1.5 g of Gellan Gum were used instead of the AJP. EXAMPLE 6 - NOODLE PREPARATION

Fried noodles were prepared as in Example 4. The results are presented in Table 3A

**Table 3A**

| **Fried noodle made out of composition of** | **Amounts [%]** | **Oil reduction %** |
|---|---|---|
| C. EXP. 2 | 1.5 | 14.6 |
| EX. 3 | 1 | 7.9 |
| EX. 5 | 2.5 | 19.7 |

The noodles made from the dough of Example 5 had the same color, mouthfeel and texture as the noodles of the control.

### EXAMPLE 7-10 - NOODLE PREPARATION

Noodles were prepared as in Example 4, with starting from a dough recipe as described in Example 2, however by using APJs having different amounts of pectin as detailed in Table 3B

| **Pectin amount [%]** | **Oil reduction %** |
|---|---|
| 4 | 2 |
| 12 | 3.9 |
| 17 | 5.7 |
| 31 | 17.7 |

### COMPARATIVE EXPERIMENTS 3-5 - DOUGH PREPARATION WITH DRIED APPLE POWDER

A dough was prepared using the same method and ingredients as in Examples 1-3, with the difference that Apple Dried Powder (i.e. a powder manufactured as described in LWT - Food Science and Technology 53 (2013), 88-93) was used instead of AJP. The amounts are presented in Table 4.

**Table 4**

| **Ingredients** | | **C. EXP. 3** | **C. EXP. 4** | **C. EXP. 5** |
|---|---|---|---|---|
| | | [%] | [%] | [%] |
| **First Aqueous Solution** | NaCl | 1.5 | | |
| | alkali | 0.3 | | |
| | water | 39 | | |
| **Second Composition** | Apple dried powder | 2 | 5 | 10 |
| | Starch | 12 | | |
| | Flour | 45.2 | 42.2 | 37.2 |

### COMPARATIVE EXAMPLE 6 - NOODLE PREPARATION

Fried noodles were prepared as in Example 4. The results are presented in Table 5

| **Fried noodle made out of composition of** | **Oil content** | **Oil reduction [%]** | **Oil reduction [g]** |
|---|---|---|---|
| **C. EXP. 1** | 19.37 | - | - |
| **C. EXP. 3** | 16.5 | 14.8 | 2.87 |
| **C. EXP. 4** | 15.7 | 18.9 | 3.67 |
| **C. EXP. 5** | 14.97 | 22.7 | 4.4 |

All noodles made using the Apple Dried Powder changed color during frying to an unappealing dark brown color. Their mouthfeel and texture were also affected.

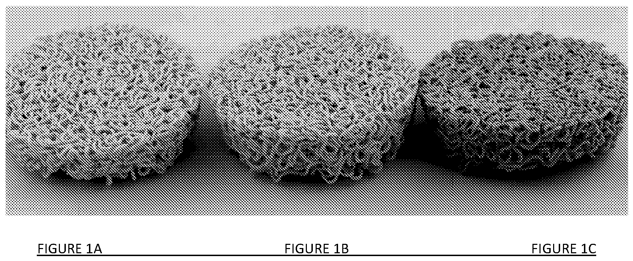

This is clearly visible in Figure 1c comparing the visual appearance of a noodle portion made with dried apple powder with noodles made with and without AJP (Figures 1b and 1a, respectively).

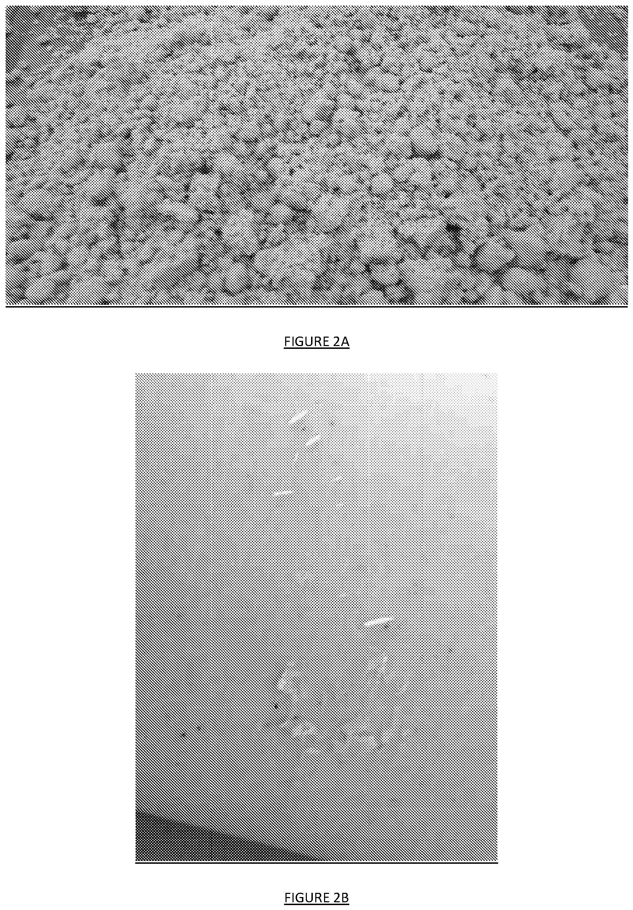

Moreover, increasing the amount of dried apple powder, render the dough highly unusable (see Figure 2a) and sticky (see Figure 2b). Noodles made from such a dough showed high unevenness and many shape irregularities while being sticky. EXAMPLES 11-13

A dough was produced as in Examples 1-3 with the difference that PJP was used instead of AJP. Noodles were manufactured as in Example 4. The results are presented in Table 6.

**Table 6**

| **Fried noodle made out of composition of** | **Amount PJP in the dough [%]** | **Oil content** | **Oil reduction [%]** | **Oil reduction [g]** |
|---|---|---|---|---|
| **Ex. 11** | 0.2 | 18.76 | 6.2 | 1.24 |
| **Ex. 12** | 0.5 | 18.64 | 6.8 | 1.36 |
| **Ex. 13** | 1.0 | 18.62 | 6.9 | 1.38 |

## Claims

1. A dough composition suitable for frying, comprising fruit-juice powder (FJP), wherein the FJP is a powder obtained by dehydrating a fruit juice extracted from fruits.

2. The dough of claim 1 wherein the FJP is apple juice powder (AJP)or pear juice powder (PJP)

3. The dough composition of claims 1 or 2, wherein the FJP contains soluble dietary fibers (SDF) and insoluble dietary fibers (IDF) in a ratio SDF/IDF of at least 1.

4. The dough composition of claims 1 or 2, wherein the FJP is present in an amount of at least 0.01 wt% relative to the total mass of the dough composition.

5. The dough composition of claims 1 or 2, further comprising additional components such as for example salts, polysaccharides, emulsifiers, proteins and/or combinations thereof.

6. The dough composition of claims 1 or 2, comprisingAJP and a hydrocolloid chosen from the group consisting of xanthan gum, carrageenan, locust bean gum, alginate, gellan gum and microfibrillated cellulose.

7. The dough composition of claim 6, wherein the ratio of hydrocolloid : AJP is between 1:1 and 15:1,

8. The dough composition of claims 1 or 2, further comprising gellan gum.

9. A method for producing and frying the dough composition of any one of the preceding claims, said method comprising the steps of:
a) providing an aqueous composition comprising water and FJP;
b) providing a second composition comprising flour;
c) mixing the aqueous composition with the second composition to obtain a dough composition; and
d) shaping and frying the dough composition to obtain a fried dough composition.

10. A fried dough obtainable by frying the dough composition of any one of claims 1-7.

11. A fried noodle comprising the fried dough of claim 10.

12. A fried doughnut comprising the fried dough of claim 10.

## Patentansprüche

1. Teigzusammensetzung, die zum Frittieren geeignet ist, umfassend Fruchtsaftpulver (FJP), wobei das FJP ein Pulver ist, das durch Dehydratisieren eines aus Früchten extrahierten Fruchtsafts erhalten wird.

2. Teig nach Anspruch 1, wobei das FJP Apfelsaftpulver (AJP) oder Birnensaftpulver (PJP) ist

3. Teigzusammensetzung nach Anspruch 1 oder 2, wobei das FJP lösliche Ballaststoffe (SDF) und unlösliche Ballaststoffe (IDF) in einem Verhältnis von SDF/IDF von mindestens 1 enthält.

4. Teigzusammensetzung nach Anspruch 1 oder 2, wobei das FJP in einer Menge von mindestens 0,01 Gew.-% bezogen auf die Gesamtmasse der Teigzusammensetzung vorliegt.

5. Teigzusammensetzung nach Anspruch 1 oder 2, ferner umfassend zusätzliche Komponenten, wie beispielsweise Salze, Polysaccharide, Emulgatoren, Proteine und/oder Kombinationen davon.

6. Teigzusammensetzung nach Anspruch 1 oder 2, umfassend AJP und ein Hydrokolloid, ausgewählt aus der Gruppe bestehend aus Xanthangummi, Carrageenan, Johannisbrotgummi, Alginat, Gellan und mikrofibrillierter Cellulose.

7. Teigzusammensetzung nach Anspruch 6, wobei das Verhältnis von Hydrokolloid : AJP zwischen 1 : 1 und 15 : 1 beträgt,

8. Teigzusammensetzung nach Anspruch 1 oder 2, ferner umfassend Gellan.

9. Verfahren zum Herstellen und Frittieren der Teigzusammensetzung nach einem der vorstehenden Ansprüche, wobei das Verfahren die Schritte umfasst:
a) Bereitstellen einer wässrigen Zusammensetzung, die Wasser und FJP umfasst;
b) Bereitstellen einer zweiten Zusammensetzung, die Mehl umfasst;
c) Mischen der wässrigen Zusammensetzung mit der zweiten Zusammensetzung, um eine Teigzusammensetzung zu erhalten; und
d) Formen und Frittieren der Teigzusammensetzung, um eine frittierte Teigzusammensetzung zu erhalten.

10. Frittierter Teig, erhältlich durch Frittieren der Teigzusammensetzung nach einem der Ansprüche 1-7.

11. Frittierte Nudel, umfassend den frittierten Teig nach Anspruch 10.

12. Frittierter Donut, umfassend den frittierten Teig nach Anspruch 10.

## Revendications

1. Composition de pâte appropriée pour la friture, comprenant de la poudre de jus de fruit (PJF), dans laquelle la PJF est une poudre obtenue par déshydratation d'un jus de fruit extrait de fruits.

2. Pâte selon la revendication 1 dans laquelle la PJF est une poudre de jus de pomme (PJpom) ou une poudre de jus de poire (PJPoi)

3. Composition de pâte selon les revendications 1 ou 2, dans laquelle la PJF contient des fibres alimentaires solubles (FAS) et des fibres alimentaires insolubles (FAI) dans un rapport FAS/FAI d'au moins 1.

4. Composition de pâte selon les revendications 1 ou 2, dans laquelle la PJF est présente en une quantité d'au moins 0,01 % en poids par rapport à la masse totale de la composition de pâte.

5. Composition de pâte selon les revendications 1 ou 2, comprenant en outre des composants supplémentaires tels que par exemple des sels, des polysaccharides, des émulsifiants, des protéines et/ou des combinaisons de ceuxci.

6. Composition de pâte selon les revendications 1 ou 2, comprenant de la PJpom et un hydrocolloïde choisi dans le groupe constitué de gomme de xanthane, carraghénane, gomme de caroube, alginate, gomme gellane et cellulose microfibrillée.

7. Composition de pâte selon la revendication 6, dans laquelle le rapport d'hydrocolloïde : PJpom est compris entre 1:1 et
15:1,

8. Composition de pâte selon les revendications 1 ou 2, comprenant en outre de la gomme gellane.

9. Procédé de production et de friture de la composition de pâte de l'une quelconque des revendications précédentes, ledit procédé comprenant les étapes consistant à :
a) fournir une composition aqueuse comprenant de l'eau et de la PJF ;
b) fournir une deuxième composition comprenant de la farine ;
c) mélanger la composition aqueuse avec la deuxième composition pour obtenir une composition de pâte ; et
d) mettre en forme et frire la composition de pâte pour obtenir une composition de pâte frite.

10. Pâte frite pouvant être obtenue par friture de la composition de pâte de l'une quelconque des revendications 1 à 7.

11. Nouille frite comprenant la pâte frite de la revendication 10.

12. Beignet frit comprenant la pâte frite de la revendication 10.
